# EUROPEAN PATENT SPECIFICATION

(11) **EP 2 615 756 B1**
(45) Date of publication and mention of the grant of the patent: **19.03.2014**
(21) Application number: 12305052.8
(22) Date of filing: 16.01.2012
(51) Int. Cl.: H04J 14/02

(54) **Method of allocating bandwidth in an optical network**
Verfahren zur Zuweisung von Bandbreite in einem optischen Netzwerk
Procédé d'attribution de largeur de bande dans un réseau optique

(43) Date of publication of application: 17.07.2013
(73) Proprietor: Alcatel Lucent, 75007 Paris (FR)
(72) Inventor: Rival, Olivier, 92340 Bourg la Reine (FR); Morea, Annalisa, 91140 Villebon sur Yvette (FR)
(74) Representative: Mildner, Volker

(56) References cited:
- ZAMI T ET AL: "Higher capacity with smaller global energy consumption in core optical networks due to elastic channel spacing", 2010 36TH EUROPEAN CONFERENCE AND EXHIBITION ON OPTICAL COMMUNICATION (ECOC 2010) IEEE PISCATAWAY, NJ, USA, [Online] vol. 2, 19 September 2010 (2010-09-19), - 23 September 2010 (2010-09-23), page 3 PP., XP002677634, DOI: 10.1109/ecoc.2010.5621119 ISBN: 978-1-4244-8536-9 Retrieved from the Internet: URL:http://ieeexplore.ieee.org/stamp/stamp .jsp?tp=&arnumber=5621119> [retrieved on 2012-06-05]
- ZAMI T: "Comparison of elastic implementations for WDM networks", 2011 37TH EUROPEAN CONFERENCE AND EXHIBITION ON OPTICAL COMMUNICATION (ECOC 2011) IEEE PISCATAWAY, NJ, USA, [Online] 2011, page 3 PP., XP002677635, ISBN: 978-1-4577-1918-9 Retrieved from the Internet: URL:http://ieeexplore.ieee.org/stamp/stamp .jsp?tp=&arnumber=6066062&tag=1> [retrieved on 2012-06-11]
- MASAHIKO JINNO ET AL: "Elastic and adaptive optical networks: possible adoption scenarios and future standardization aspects", IEEE COMMUNICATIONS MAGAZINE, IEEE SERVICE CENTER, PISCATAWAY, US, vol. 49, no. 10, 1 October 2011 (2011-10-01), pages 164-172, XP011385330, ISSN: 0163-6804, DOI: 10.1109/MCOM.2011.6035831

## Description

### Field of the invention

The present invention relates to the field of transparent optical networks. More specifically, the present invention relates to a system and method of channel allocation in a transparent optical network.

### Background

The steady increase of capacity demand in transport core networks requires cost-effective solutions for increasing the amount of traffic that can be carried by fibre infrastructures which have already been deployed. Current network architectures based on a single grid wavelength allocation scheme (e.g. 50 GHz or 100GHz grids as defined by the International Telecommunication Union's Telecommunications Standardisation Sector, or ITU-T) can result in congestion of certain links and blocking in parts of a network, while spectral bandwidth is still available in other parts of the network. In order to accommodate an ever-growing capacity demand in a fibre-limited environment, it is therefore necessary to push network capacity beyond that allowed by standard wavelength grids.

This problem is compounded by the desire to keep the cost and energy consumption of the network to a minimum. Increasing transmission via transparent optical data path generally reduces the amount of energy consumption needed for optical transmission in the optical layer but may cause increased energy consumption in other/higher layers of the network. That is to say that the higher the degree of transparency, the fewer optical-electrical-optical (OEO) conversions will be present in the network. Several methods and systems have been developed to attempt to address this problem.

One such method involves the use of a uniform wavelength grid with smaller-than-50GHz spacing, as used for instance in submarine transmission links to increase their spectral efficiency. In meshed networks, this solution requires changing all wavelengths selective switches (WSS) to ensure compatibility with the new spacing. In addition, the smaller spaced grid causes increased physical impairments (e.g. cross-talk and cross-phase modulation, or XPM) and forces the use of numerous OEO regenerators even for demands passing through links which are far from congestion.

Another known method consists of dividing the spectrum of each link into two or more bands, with different channel spacings on each band. The main drawback of such a solution is its lack of flexibility, because the spectrum of all links has to be split in bands of the same width regardless of their level of congestion to avoid fragmentation problems. As is the case with the previous solution, the use of narrow spacing where not needed reduces the transparent reach and increases the number of required OEO. Moreover, this solution is not compliant with most current WSS architectures.

Another known approach, as disclosed in ZAMI T ET AL - "Higher capacity with smaller global energy consumption in core optical networks due to elastic channel spacing" 19-23 September 2010 36TH EUROPEAN CONFERENCE AND EXHIBITION ON OPTICAL COMMUNICATION (ECOC 2010) IEEE PISCATAWAY, NJ, USA, vol. 2, 3 PP. DOI: 10, 1109/ecoc.2010.5621119 ISBN: 978-1-4244-8536-9, is to divide the spectrum of the network into a transparent band and an opaque band and use as close a spacing as physically feasible (depending on link length) in the opaque band. The channel spacing (and hence link capacity) can thus be adjusted on a link-per-link basis, avoiding wavelength continuity issues while retaining some degree of transparency. This approach however, wastes transparent bandwidth in uncongested links and opacity requires a high number of OEO resources. This makes it difficult to control the increase in price/energy consumption per connection for a target capacity increase.

### Summary

In order to solve the problems associated with the prior art, the present invention provides a method for allocating bandwidth in an optical network. The method comprises different steps.

A bandwidth grid containing first bandwidth slots of a lower bandwidth and higher bandwidth slots of a higher bandwidth, which is twice the lower bandwidth, is provided, wherein one of the higher bandwidth slots represents a same bandwidth on said bandwidth grid as two of the lower bandwidth slots.

Furthermore, a set of requests for respective data transmission connections with respective data rates and respective shortest path metrics is provided.

Even furthermore, shorter distances, over which a data signal may be transmitted transparently at the respective data rate within the lower bandwidth, and longer distances, over which a data signal may be transmitted transparently at the respective data rate within the higher bandwidth, are provided for the data transmission connections.

The method comprises furthermore the step of allocating bandwidth slots of the lower bandwidth for those of the data transmission connections, whose respective shortest path metric is smaller than or equal to their respective shorter distance.

Finally, bandwidth slots of the lower or the higher bandwidth are allocated for the further of the data transmission connections, whose respective shortest path metric is greater than their respective shorter distance, using respective first and second numbers of necessary optical-electrical-optical regenerations for transmitting data signals at the respective data rates via the further data transmission connections using the lower bandwidth or the higher bandwidth respectively.

As will be appreciated, the present invention provides several advantages over the prior art. For example, the present invention allows a network design tool to optimize the allocation of bandwidth slots of fixed wavelength grids on links in an optical network, such that transparent optical transmission paths are realized at least partially in order to keep the cost and energy consumption of the network at a minimized level, by taking into account the number of necessary optical-electrical-optical (OEO) conversions into account. Thus, it is achieved to carry more traffic than allowed by fixed wavelength grids.

The present invention proposes to pack transmission channels close together on a bandwidth grid, thus achieving the use of high spectral efficiencies.

Moreover, the present invention is also cost-efficient in that the amount of signals allocated onto slots of a bandwidth grid is controlled.

Furthermore, the complexity of the method of the present invention is low and it can be preferably implemented in, for example, a GMPLS control plane.

### Brief Description of the Figures

Figure 1 is a diagram representing the relationship between 50GHz and 25GHz grids as defined by the International Telecommunication Union (ITU).
Figure 2 is diagram representing a 25GHz grid, and an example of allowed spectrum allocation for 50GHz-wide channels, in accordance with the present invention.
Figure 3 represents a diagram of a network for use with an embodiment of the present invention.
Figure 4 is a table of links lengths in the network represented in Figure 3.
Figure 5 is a table containing an example of traffic request information relating to the network of Figure 3.
Figure 6 is a diagram representing the paths associated with the various traffic requests contained in the table of Figure 5.
Figure 7 shows a flow chart of the proposed algorithm according to an embodiment.
Figures 8 to 12 show tables containing desired transmission together with respective values.

### Description of Embodiments

Specific non-limiting technical embodiments of the present invention will now be described.

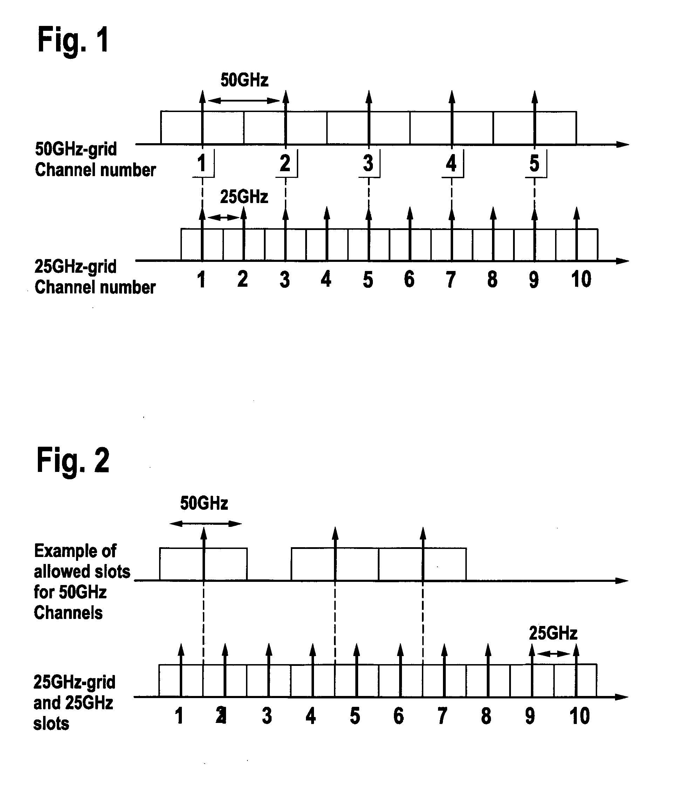

Figure 1 is a diagram representing the relationship between 50GHz and 25GHz grids as defined by the International Telecommunication Union (ITU) and Figure 2 is diagram representing a 25GHz grid, and an example of allowed spectrum allocation for 50GHz-wide channels, in accordance with the present invention.

The bandwidth grid as defined by the ITU is such, that the centre frequency of an n-th 50 Ghz bandwidth slot corresponds to the centre frequency of an (2*n-1)-th 25 Ghz bandwidth slot. Thus, a 50 Ghz bandwidth slot overlaps at least partially with three other 25 Ghz bandwidth slots.

The bandwidth grid as proposed herein is such, that a centre frequency of a 50 Ghz bandwidth slot lies between the centre frequencies of two other 25 Ghz bandwidth slots. Thus, a 50 Ghz bandwidth slot overlaps, preferably exactly, with two other 25 Ghz bandwidth slots.

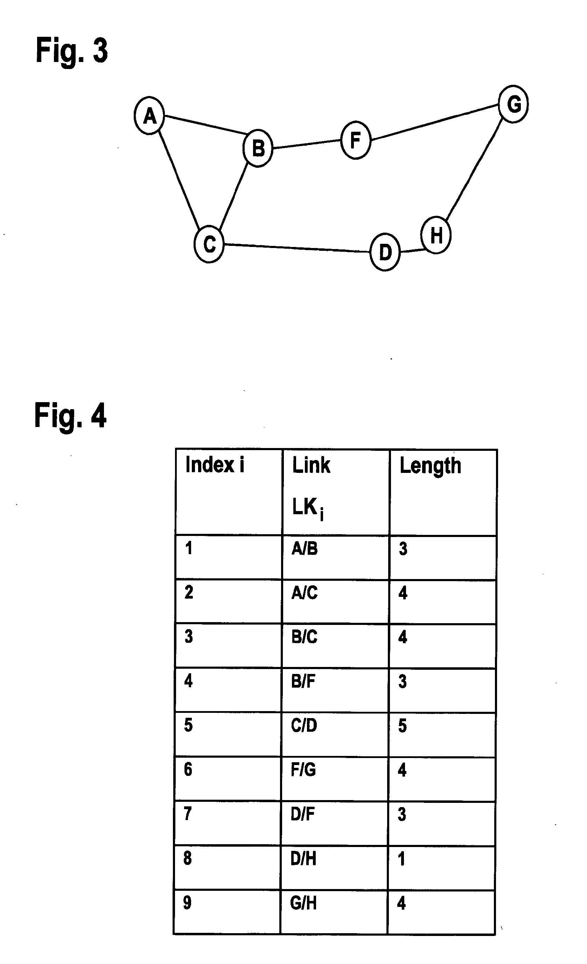

Figure 3 represents a diagram of a network for use with an embodiment of the present invention. The network shown in Figure 3 is a Wavelength Division Multiplexed (WDM) network. The optical spectrum that can be used for data transmission on each link is limited and therefore bandwidth slots of this spectrum have to be allocated on the links for demanded transmission paths.

The network shown comprises a plurality of nodes A, B, C, D, F, G and H and a plurality of links there between A/B, A/C, B/C, B/F, C/D, F/G, D/F, D/H and G/H. Each node comprises a plurality of optical input ports, a plurality of optical output ports, and means capable of transferring an optical signal from its input to its output without conversion to an electrical signal, which is called a transparent transmission. Moreover, each node also comprises means capable of receiving an optical signal, converting the received optical signal into an electrical signal, thereby allowing the signal to be regenerated in the electrical domain, and converting the electrical signal back to an optical signal, before transmitting the optical signal through an output port, which is called an opaque transmission.

Figure 4 is a table of the link lengths of the network of Figure 4. As will be appreciated, the values in this example have been chosen in order to simply the understanding of the present invention and do not have units. In practice, the units of most WDM networks would be in the region of kilometres, or hundreds of kilometres. The length of the span will affect the signal quality of a received signal. In general terms, the longer the ultimate path of a given optical signal, the poorer the quality of the received signal will be. Conversely, the shorter the path of the signal, the higher the quality of the received signal will be. Moreover, the modulation format that is used also affects the span that a data signal can travel without exceeding a maximum bit error ratio (BER) at the receiver. On may assume that a data signal with a predefined data rate that is transmitted within a first bandwidth slot of a first bandwidth by means of a predefined modulation format with a predefined symbol rate, this data signal will be able to travel over a span preferably called a first reach without OEO conversion and without exceeding a maximum bit error ratio at the receiver. This first reach is amongst other things limited due to the fact of cross-talk and cross-polarization between neighbouring bandwidth slots. If the same data signal with the same data rate is transmitted within a second bandwidth slot of a second bandwidth, greater than the first bandwidth, by means of the same general modulation format with the same predefined symbol rate, this data signal will be able to travel over a span preferably called a second reach without OEO conversion and without exceeding a maximum bit error ratio at the receiver, wherein this second reach is greater than the first reach.

Thus, by knowing the properties of the optical link over which the data signal is to be transmitted and the chosen modulation format, one may determine a first reach over which the signal may be transmitted transparently when using a first bandwidth slot of a first bandwidth, as well as a second bandwidth slot of a second bandwidth without OEO conversion and without exceeding a maximum bit error ratio at the receiver.

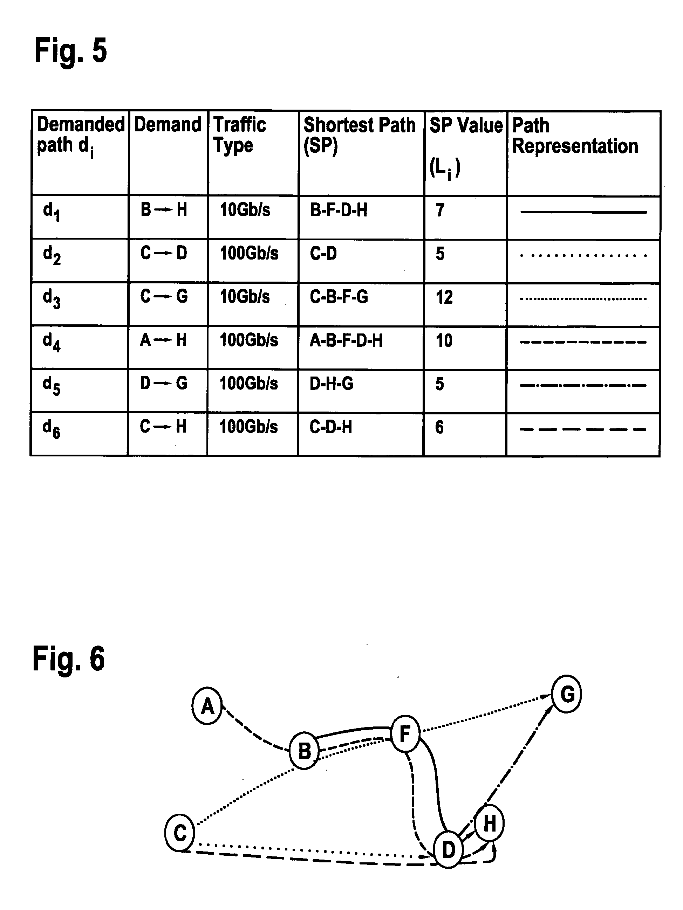

Figure 5 represents an example of information relating to requested transmission paths or transmission connections in regard to the present embodiment. Each request d₁, d₂, d₃, d₄, d₅, d₆, denoted as dᵢ with index i, comprises a demand, e.g. from node B to node H, denoted as "B→H", a demanded data rate, a shortest path , e.g. from node B to node F to node D and then finally to node H, denoted as "B-F-D-H", and a shortest path value Lᵢ, which represents the sum of the link lengths included in the shortest path. This non-limiting example has been chosen in order to provide a simple way of explaining the invention. Accordingly, the invention is not limited in any way to the specific features of the above traffic requests.

As mentioned above, a signal of a given data rate transmitted over a given bandwidth will be associated with a specific distance, called span or reach, over which that signal can travel transparently. For the purposes of simplicity, it is assumed that the reach over which an optical signal can be transmitted transparently travel while maintaining an acceptable error rate is determined primarily by it spectral efficiency, i.e. the ratio between the data rate and the bandwidth of the optical spectrum that the signal occupies. It is a well documented fact that the reach tends to decrease rapidly when the spectral efficiency increases.

Each node (transponder) can tune the amount of bandwidth allocated to the signal, carrying data at a constant data rate they transmit. These nodes are thus capable of trading transparent reach for spectrum efficiency or the other way around, according to which feature (cost-efficiency or network throughput) is most desirable.

In this example, 10Gb/s non-return to zero (NRZ) channels can be multiplexed on 50GHz grids or 25GHz grid and 100Gb/s traffic can be routed through Polarization-Division-Multiplexed Quaternary Phase Shift Keying at 28Gbaud, requiring 50GHz of spectrum, or through Polarization-Division-Multiplexed 16 Quadrature Amplitude Modulation at 14 Gbaud, requiring 25GHz of spectrum.

Moreover, it is assumed that the reach of a 100Gb/s signal transmitted over a 50GHz channel is 10 units of length, preferably called Reach2 for 100Gb/s, the reach of a 100Gb/s signal transmitted over a 25GHz channel is 5 units of length, preferably called Reach1 for 100Gb/s; the reach of a 10Gb/s signal transmitted over a 50GHz channel is 15, preferably called Reach2 for 10Gb/s, and the reach of a 10Gb/s signal transmitted over a 25GHz channel is 6, preferably called Reach1 for 10Gb/s. Thus, for each demanded transmission connection d_i with index i respective reaches Reach1_i and Reach2_i can be determined depending on the demanded data rate of the respective connection.

Figure 6 is a graphical representation of the shortest paths for the requested traffic connections of Figure 5 applied to the network of Figure 3. As can be seen from Figure 6, not all links will need to support the same number of signals. For example, link B/F will need to carry three signals, link C/D will need to carry two signals and link D/H will need to carry four signals. In order to route this traffic demands with maximum efficiency, the method of the present invention will be used.

The demanded transmission connections d_i may be listed in a list of demands to be routed through the network as list D={d_i}. This list D contains the demanded transmission connections, as for example shown in the table of Figure 5.

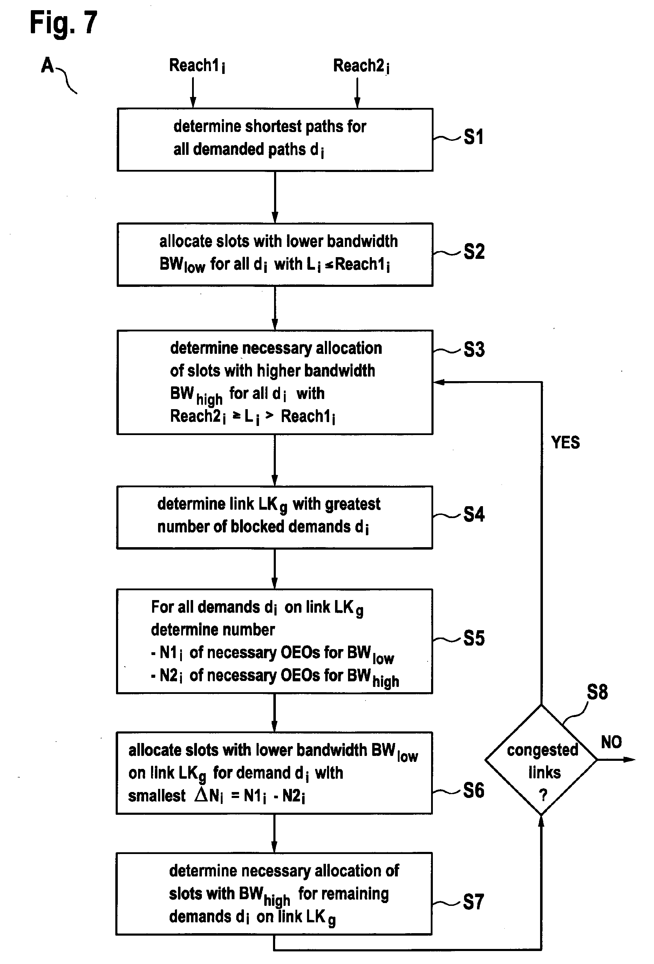

Figure 7 shows steps of the proposed algorithm A. The algorithm is provided with respective values Reach1_i and Reach2_i for each demand with index i. In a step S1, shortest-paths are determined for all demanded connections d_i. The resulting paths in this example are shown in Figure 6. Clearly, the link LK_4 from the node D to the node H needs to carry the most demanded connections di, in this case four connections.

Coming back to Figure 7, bandwidth slots with a lower bandwidth BW_low, in this example BW_low=25 GHz, are allocated for those demanded connections, for which the corresponding shortest path value L_i is smaller than the corresponding smaller reach Reach1_i for a 25Ghz slot. The allocation of these bandwidth slots may be carried out using messages of the Resource Reservation Protocol (RSVP). Thus, with these allocations transparent data transmission along the corresponding transmission connections is ensured.

In a step S3, it is determined whether an allocation of bandwidth slots with a larger bandwidth BW_high, in this example BW_high=50 GHz, is necessary for ensuring transparent data transmission along transmission connections, for which the corresponding shortest path value L_i is greater than the corresponding smaller reach Reachl_i. It may be the case, that, when trying to establish transparent data connections using bandwidth slots with a larger bandwidth BW_high, the overall bandwidth of a link LK_i is exceeded.

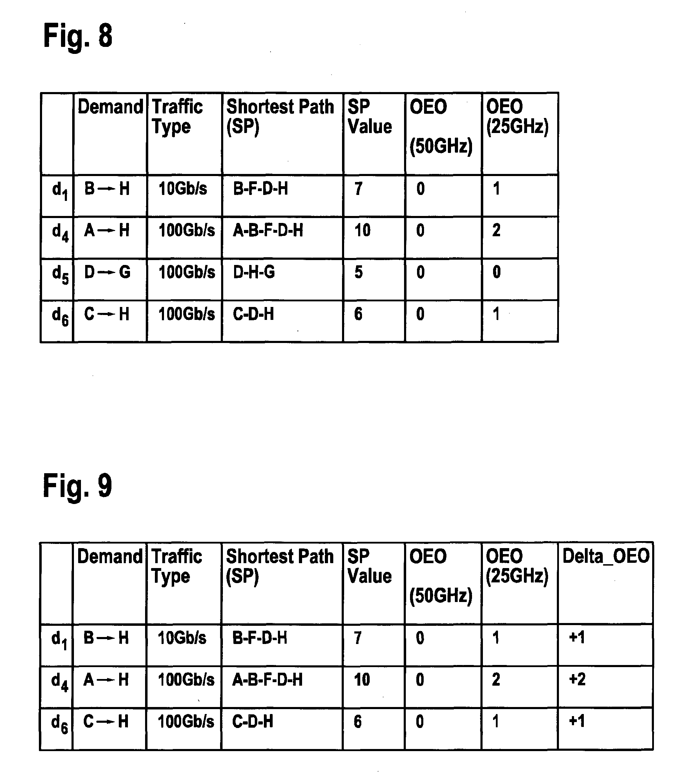

In this example, the link LK_4 shall have a maximum bandwidth of 125 GHz. The desired transmission connections d1, d4, d5 and d6 that shall be routed via the link LK_8 are shown in the table of Figure 8. It is clear, that when wishing to establish these transmission connections d1, d4, d5 and d6 as pure transparent connections without any OEO conversion, an overall bandwidth of 175Ghz is needed. Since the link LK_8 has a maximum bandwidth of 125 Ghz, this is not possible. If all these transmission connections d1, d4, d5 and d6 were established by means of 25GHz slots only, then only 100Ghz bandwidth would be used while a maximum of 4 OEO conversions would be necessary, which is not desirable.

Thus, in a step S4, it is determined that link LK_g with index g, for which the greatest number of desired data connections is blocked when trying to achieve pure transparent transmission without OEO conversions. In this case, this is the link LK_8 with g=8 connecting the nodes D and H.

In a step S5, it is determined for each desired transmission connection d1, d4, d6, which cannot be established transparently with the smaller bandwidth BW_low via this link LK_8, the number N1_i of necessary OEO conversions when using the smaller bandwidth BW_low and the number N2_i of necessary OEO conversions when using the larger bandwidth BW_high. In this example, the desired transmission connections d1, d4, d6 together with the necessary numbers of OEO conversions for BW_low=25 GHz and BW_high= 50 GHz are shown in the table of Figure 9. Furthermore, for each of these desired transmission connections d1, d4, d6 the difference ΔN_i= N1_i-N2_i is determined, as shown in Figure 9.

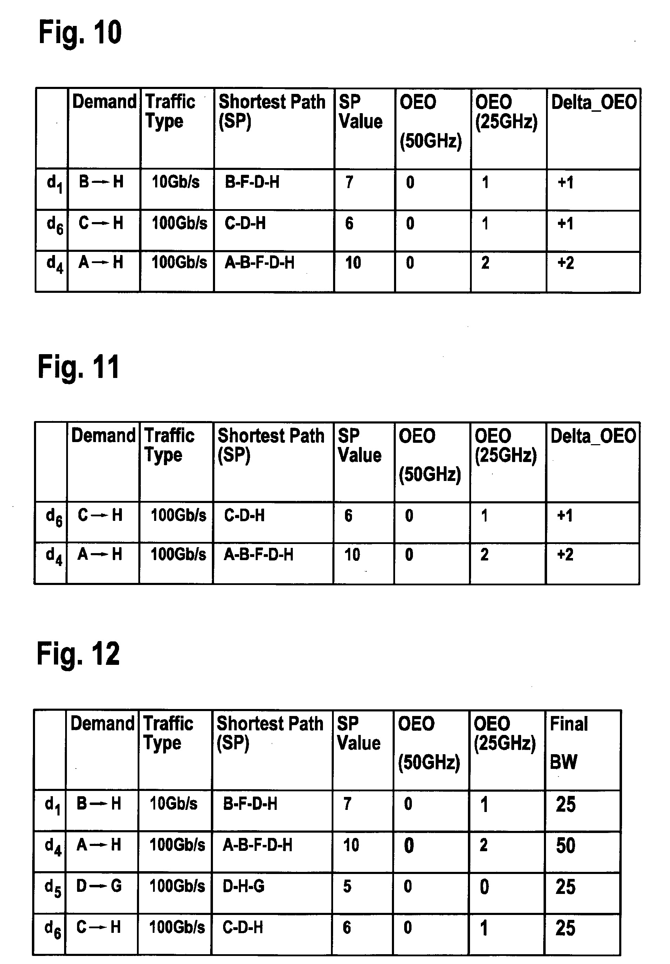

The desired transmission connections d1, d4, d6, which cannot be established transparently with the smaller bandwidth BW_low via this link LK_8, may then be sorted in an ascending order depending on their corresponding values of ΔN_i, as shown in the table of Figure 10.

In a step S6, a bandwidth slot of the lower bandwidth BW_low is then allocated on the examined link LK_g=LK_8 for that transmission connection d1, which has the smallest values of ΔN_i, out of the remaining desired transmission connections d1, d4, d6. In this example, the transmission connections d1 and d6 both have a same smallest value of ΔN_i=+1, but only the connection d1 as one of these transmission connections d1 and d6 is chosen for allocating bandwidth slots of the lower bandwidth BW_low on the examined link LK_g=LK_8.

The allocation of this bandwidth slot may be carried out using messages of the Resource Reservation Protocol (RSVP). Thus, in this example, the transmission connection d1 is allocated a bandwidth slot of BW_low=25GHz, leading to the need of one OEO conversion for each of them. This leads to an allocation of 25 Ghz bandwidth for the connection d1, and thus to an intermediate overall allocation of 50 GHz on the link LK_8. Since the link LK_8 has a maximum bandwidth of 125 GHz, there is still a 75 GHz bandwidth available on the link LK_8.

The remaining desired transmission connections, in this case the transmission connections d6 and d4, for which no bandwidth slots are yet allocated, may then be stored in a table shown in Figure 11.

In a step S7, a necessary allocation of bandwidth slots with a larger bandwidth BW_high is then determined for the remaining demanded transmission connections, when trying to achieve transparent data transmission, which in this example are the connections d6 and d4. If such an allocation is possible, this is carried out via the messages of the Resource Reservation Protocol (RSVP). An allocation of 50 GHz for each of the connections d6 and d4 would demand an allocation of 100 GHz for the connections d6 and d4. Since there is only still a bandwidth of 75 GHz bandwidth available on the link LK_8, it is not possible to allocate a 50 GHz slot for each of the demanded connections d6 and d4.

In a step S8 it is checked, if there are still links remaining in the network, for which desired transmission connections cannot be established as pure transparent connections. Such links may be called congested links. If this is not the case, the algorithm A ends. If this is the case, the algorithm returns to the step S3. Re-starting from the step S3, only links that have not yet been examined within the steps S4 to S7 will be considered. In this example, it is determined, that the link LK_8 is still congested, since and allocation of a 50 GHz slot for each of the demanded connections d6 and d4 is not possible on the link LK_8. Thus, in this example, the algorithm A returns to the step S3 from where it starts a further iteration.

In this further iteration, the algorithm A reaches once again the step S6, in which in this example the demand d6 is identified as the demand with the smallest number of ΔN_i, as it can be seen in Figure 11. Thus, a bandwidth slot of the lower bandwidth BW_low is then allocated on the examined link LK_g=LK_8 for that transmission connection d6. Thus, an intermediate overall allocation of 75 GHz is now given on the link LK_8. Since the link LK_8 has a maximum bandwidth of 125 GHz, there is still a 50 GHz bandwidth available on the link LK_8. The remaining demanded transmission connection is the connection d4.

In a step S7, a necessary allocation of bandwidth slots with a larger bandwidth BW_high is then determined for the remaining demanded transmission connections when trying to achieve transparent data transmission, which in this example is the connection d4. If such an allocation is possible, this is carried out via the messages of the Resource Reservation Protocol (RSVP). An allocation of 50 GHz for each of the connection d4 is possible in this example, and thus carried out. This leads to an overall bandwidth allocation on the link LK_8 of 125 GHz. Thus, it is achieved by the proposed method to maximise the allocated bandwidth on the link LK_g=LK_8, while minimizing the number of necessary OEO conversions.

The table shown in Figure 12 illustrates the chosen bandwidth allocation for each of the demanded transmission connections on the link LK_8 together with the resulting number of OEO conversions for the given example.

In a step S8 it is checked, if there are still links other than the examined link LK_g=LK_8 remaining in the network, for which desired transmission connections cannot be established as pure transparent connections. Such links may be called congested links. If this is not the case, the algorithm A ends. If this is the case, the algorithm returns to the step S3. Re-starting from the step S3, only links that have not yet been examined within the steps S4 to S7 will be considered.

## Claims

1. Method of allocating bandwidth in an optical network **characterized by**,
- providing a bandwidth grid containing first bandwidth slots of a lower bandwidth and higher bandwidth slots of a higher bandwidth, which is twice the lower bandwidth, wherein one of said higher bandwidth slots represents a same bandwidth on said bandwidth grid as two of said lower bandwidth slots,
- providing a set of requests for respective data transmission connections (d1, ..., d6) with respective data rates and respective shortest path metrics (L_i),
- providing for said data transmission connections (d1, ..., d6) respective shorter distances (Reach1), over which a data signal may be transmitted transparently at the respective data rate within said lower bandwidth, and respective longer distances (Reach2), over which a data signal may be transmitted transparently at the respective data rate within said higher bandwidth,
- allocating bandwidth slots of said lower bandwidth for those of said data transmission connections (d5), whose respective shortest path metric is smaller than or equal to their respective shorter distance (Reach1),
- allocating bandwidth slots of said lower or said higher bandwidth for the further of said data transmission connections (d1, d4, d6), whose respective shortest path metric is greater than their respective shorter distance (Reach1), using respective first and second numbers of necessary optical-electrical-optical regenerations (N1_i, N2_i) for transmitting data signals at the respective data rates via said further data transmission connections using said lower bandwidth or said higher bandwidth respectively.

2. Method according to claim 1,
wherein the step of allocating bandwidth slots of said lower or said higher bandwidth for said further data transmission connections (d1, d4, d6) comprises
- determining a necessary allocation of bandwidth slots of said higher bandwidth for said further data transmission connections,
- in case an allocation of bandwidth slots of said higher bandwidth for said further data transmission connections is not feasible, determining the link of said optical network with the greatest number of said further data transmission connections, for which bandwidth slots of said higher bandwidth cannot be allocated,
- allocating bandwidth slots of said lower or said higher bandwidth for said further data transmission connections (d1, d4, d6) on said link, using said respective first and second numbers of necessary optical-electrical-optical regenerations (N1_i, N2_i) for transmitting data signals at the respective data rates via said further data transmission connections within said lower bandwidth or said higher bandwidth respectively.

3. Method according to claim 1 or 2,
wherein said step of allocating bandwidth slots of said lower or said higher bandwidth for said further data transmission connections (d1, d4, d6) comprises furthermore
- determining for said further data transmission connections said respective first and second numbers of necessary optical-electrical-optical regenerations (N1_i, N2_i).

4. Method according to claim 3,
wherein the step of allocating bandwidth slots of said lower or said higher bandwidth for said further data transmission connections (d1, d4, d6) on said link comprises furthermore
- allocating bandwidth slots of said lower bandwidth for a first subset of said further data transmission connections (d1, d4, d6),
- allocating bandwidth slots of said higher bandwidth for a second subset of said further data transmission connections (d1, d4, d6),
- wherein for data transmission connections of said first subset, respective differences (ΔN_i) between said respective first and said respective second numbers of necessary optical-electrical-optical regenerations (N1_i, N2_i) are smaller than for data transmission connections of said second subset.

5. Method according to claim 3,
wherein said step of allocating bandwidth slots of said lower or said higher bandwidth for said further data transmission connections (d1, d4, d6) on said link comprises furthermore
- allocating bandwidth slots of said lower bandwidth for that of said further data transmission connections (d1, d4, d6), for which respective differences (ΔN_i) between said respective first and said respective second necessary numbers of necessary optical-electrical-optical regenerations (N1_i, N2_i) are smallest.

6. Method according to claim 5,
comprising furthermore
- determining a necessary allocation of bandwidth slot of said higher bandwidth for the remaining of said further data transmission connections (d4) on said link,
- in case, an allocation of bandwidth slots of said higher bandwidth for the remaining of said further data transmission connections (d4) on said link is feasible, allocating bandwidth slots of said higher bandwidth for the remaining of said further data transmission connections (d4) on said link.

7. Method according to claim 6,
- in case, an allocation of bandwidth slots of said higher bandwidth for the remaining of said further data transmission connections (d4) on said link is not feasible, returning to said step of determining that link of said optical network with the greatest number of said further data transmission connections, for which bandwidth slots of said higher bandwidth cannot be allocated.

8. Method according to claim 3,
wherein said respective first and second numbers of necessary optical-electrical-optical regenerations (N1_i N2_i) are determined for said further data transmission connections using
- said respective data rates,
- said shortest path metrics,
- a predefined modulation method, and
- a maximum bit error rate, which shall not be exceeded at a receving end of the respective data transmission connection.

9. Method according to claim 1,
wherein a transparent transmission is one, in which an optical signal is not regenerated by means of optical-electrical-optical'conversion.

10. Method according to claim 1,
wherein an allocation of bandwidth slots is carried out using messages of the Resource Reservation Protocol (RSVP).

11. Method according to claim1,
comprising
- allocating bandwidth slots of said lower or said higher bandwidth for the further of said data transmission connections (d1, d4, d6), whose respective shortest path metric is greater than their respective shorter distance (Reach1) and smaller than or equal to their respective longer distance (Reach2), using respective first and second numbers of necessary optical-electrical-optical regenerations (N1_i, N2_i) for transmitting data signals at the respective data rates via said further data transmission connections within said lower bandwidth and said higher bandwidth respectively.

12. Method according to claim 1,
wherein the step of providing said set of requests for respective data transmission connections (d1, ..., d6) comprises determining said respective shortest path metrics (L_i) for said data transmission connections (d1, ..., d6).

## Patentansprüche

1. Verfahren zum Zuweisen von Bandbreite in einem optischen Netzwerk, **gekennzeichnet durch**:
- Bereitstellen eines Bandbreitenraster mit ersten Bandbreitenschlitzen einer niedrigeren Bandbreite und höheren Bandbreitenschlitzen einer höheren Bandbreite, welche das Doppelte der niedrigeren Bandbreite beträgt, wobei einer der besagten höheren Bandbreitenschlitze eine selbe Bandbreite auf dem besagten Bandbreitenraster wie zwei der besagten niedrigeren Bandbreitenschlitze darstellt,
- Bereitstellen eines Satzes von Anforderungen für jeweilige Datenübertragungsverbindungen (d1, ..., d6) mit jeweiligen Datenraten und jeweiligen kürzesten Pfadmaßen (L_i),
- Bereitstellen, für die besagten Datenübertragungsverbindungen (d1, ..., d6), von jeweiligen kürzeren Entfernungen (Reach 1), über welche ein Datensignal transparent mit der jeweiligen Datenrate innerhalb der niedrigeren Bandbreite übertragen werden kann, und von jeweiligen längeren Entfernungen (Reach 2), über welche ein Datensignal transparent mit der jeweiligen Datenrate innerhalb der besagten höheren Bandbreit übertragen werden kann,
- Zuweisen von Bandbreitenschlitzen der besagten niedrigeren Bandbreite für solche der besagten Datenübertragungsverbindungen (d5), deren jeweiliges kürzester Pfadmaß kleiner als ihre oder gleich ihrer jeweiligen kürzeren Entfernung (Reach1) ist,
- Zuweisen von Bandbreitenschlitzen der besagten niedrigeren Bandbreite oder der besagten höheren Bandbreite für die weiteren der besagten Datenübertragungsverbindungen (d1, d4, d6), deren jeweiliges kürzester Pfadmaß größer als ihre jeweilige kürzere Entfernung (Reach1) ist, unter Verwendung von jeweiligen ersten und zweiten Anzahlen von erforderlichen optisch-elektrisch-optischen Regenerationen (N1_i, N2_i) für die Übertragung von Datensignaten mit den jeweiligen Datenraten über die besagten weiteren Datenübertragungsverbindungen unter Verwendung jeweils der besagten niedrigeren Bandbreite oder der besagten höheren Bandbreite.

2. Verfahren nach Anspruch 1,
wobei der Schritt des Zuweisens von Bandbreitenschlitzen der besagten niedrigeren oder der besagten höheren Bandbreite für die besagten weiteren Datenübertragungsverbindungen (d1, d4, d6) umfasst:
- Ermitteln einer erforderlichen Zuweisung von Bandbreitenschlitzen der besagten höheren Bandbreite für die besagten weiteren Datenübertragungsverbindungen, wenn eine Zuweisung von Bandbreitenschlitzen der besagten höheren Bandbreite für die besagten weiteren Datenübertragungsverbindungen nicht möglich ist, Ermitteln der Verbindungsstrecke des besagten optischen Netzwerks mit der größten Anzahl der besagten weiteren Datenübertragungsverbindungen, für welche keine Bandbreitenschlitze der besagten höheren Bandbreite zugewiesen werden können,
- Zuweisen von Bandbreitenschlitzen der besagten niedrigeren oder der besagten höheren Bandbreite für die besagten weiteren Datenübertragungsverbindungen (d1, d4, d6) auf der besagten Verbindungsstrecke unter Verwendung der besagten jeweiligen ersten und zweiten Anzahlen von erforderlichen optisch-elektrisch-optischen Regenerationen (N1_i, N2_i) für die Übertragung von Datensignalen mit den jeweiligen Datenraten über die besagten weiteren Datenübertragungsverbindungen jeweils innerhalb der besagten niedrigeren Bandbreite oder der besagten höheren Bandbreite.

3. Verfahren nach Anspruch 1 oder 2,
wobei der besagte Schritt des Zuweisens von Bandbreitenschlitzen der besagten niedrigeren oder der besagten höheren Bandbreite für die besagten weiteren Datenübertragungsverbindungen (d1, d4, d6) weiterhin umfasst:
- Ermitteln der besagten jeweiligen ersten und zweiten Anzahlen von erforderlichen optisch-elektrisch-optischen Regenerationen (N1_i, N2_i) für die besagten weiteren Datenübertragungsverbindungen.

4. Verfahren nach Anspruch 3,
wobei der Schritt des Zuweisens von Bandbreitenschlitzen der besagten niedrigeren oder der besagten höheren Bandbreite für die besagten weiteren Datenübertragungsverbindungen (d1, d4, d6) auf der besagten Verbindungsstrecke weiterhin umfasst:
- Zuweisen von Bandbreitenschlitzen der besagten niedrigeren Bandbreite für einen ersten Teilsatz der besagten weiteren Datenübertragungsverbindungen (d1, d4, d6),
- Zuweisen von Bandbreitenschlitzen der besagten höheren Bandbreite für einen zweiten Teilsatz der besagten weiteren Datenübertragungsverbindungen (d1, d4, d6),
- wobei für Datenübertragungsverbindungen des besagten ersten Teilsatzes jeweilige Differenzen (ΔN_i) zwischen den besagten jeweiligen ersten und den besagten jeweiligen zweiten Anzahlen von erforderlichen optisch-elektrisch-optischen Regenerationen (N1_i, N2_i) kleiner sind als für Datenübertragungsverbindungen des besagten zweiten Teilsatzes.

5. Verfahren nach Anspruch 3,
wobei der besagte Schritt des Zuweisens von Bandbreitenschlitzen der besagten niedrigeren oder der besagten höheren Bandbreite für die besagten weiteren Datenübertragungsverbindungen (d1, d4, d6) auf der besagten Verbindungsstrecke weiterhin umfasst:
- Zuweisen von Bandbreitenschlitzen der besagten niedrigeren Bandbreite für diejenige der besagten weiteren Datenübertragungsverbindungen (d1, d4, d6), für weiche die jeweiligen Differenzen (ΔN_i) zwischen den besagten jeweiligen ersten und den besagten jeweiligen zweiten Anzahlen von erforderlichen optisch-elektrisch-optischen Regenerationen (N1_i, N2_i) am kleinsten sind.

6. Verfahren nach Anspruch 5,
weiterhin umfassend:
- Ermitteln einer erforderlichen Zuweisung von Bandbreitenschlitzen der besagten höheren Bandbreite für die restlichen der besagten weiteren Datenübertragungsverbindungen (d4) auf der besagten Verbindungsstrecke,
- wenn eine Zuweisung von Bandbreitenschlitzen der besagten höheren Bandbreite für die restlichen der besagten weiteren Datenübertragungsverbindungen (d4) auf der besagten Verbindungsstrecke möglich ist, Zuweisen von Bandbreitenschlitzen der besagten höheren Bandbreite für die restlichen der besagten weiteren Datenübertragungsverbindungen (d4) auf der besagten Verbindungsstrecke.

7. Verfahren nach Anspruch 6,
- wenn eine Zuweisung von Bandbreitenschlitzen der besagten höheren Bandbreite für die restlichen der besagten weiteren Datenübertragungsverbindungen (d4) auf der besagten Verbindungsstrecke nicht möglich ist, Zurückkehren zum besagten Schritt des Ermittelns derjenigen Verbindungsstrecke des besagten optischen Netzwerks mit der größten Anzahl der besagten weiteren Datenübertragungsverbindungen, für welche keine Bandbreitenschlitze der besagten höheren Bandbreite zugewiesen werden können.

8. Verfahren nach Anspruch 3,
wobei die besagten jeweiligen ersten und zweiten Anzahlen von erforderlichen optisch-elektrisch-optischen Regenerationen (N1_i, N2_i) für die besagten weiteren Datenübertragungsverbindungen unter Verwendung
- der besagten jeweiligen Datenraten,
- der kürzester Pfadmaße,
- eines vordefinierten Modulationsverfahrens und
- einer maximalen Bitfehlerrate, die an einem Empfangsende der jeweiligen Datenübertragungsverbindung nicht überschritten werden darf,
ermittelt werden.

9. Verfahren nach Anspruch 1,
wobei eine transparente Übertragung eine Übertragung ist, in welcher ein optisches Signal nicht mittels einer optisch-elektrisch-optischen Umwandlung regeneriert wird.

10. Verfahren nach Anspruch 1,
wobei eine Zuweisung von Bandbreitenschlitzen unter Verwendung von Nachrichten von dem Ressourcenreservierungsprotokoll (RSVP) verfolgt.

11. Verfahren nach Anspruch 1,
umfassend:
- Zuweisen von Bandbreitenschlitzen der besagten niedrigeren oder der besagten höheren Bandbreite für die weiteren der besagten Datenübertragungsverbindungen (d1, d4, d6), deren jeweiliges kürzester Pfadmaß größer als ihre jeweilige kürzere Entfernung (Reach1) und kleiner als ihre oder gleich ihrer jeweiligen längeren Entfernung (Reach2) ist, unter Verwendung von jeweiligen ersten und zweiten Anzahlen von erforderlichen optisch-elektrisch-optischen Regenerationen (N1_1, N2_i) für die Übertragung von Datensignalen mit den jeweiligen Datenraten über die besagten weiteren Datenübertragungsverbindungen jeweils innerhalb der besagten niedrigeren Bandbreite oder der besagten höheren Bandbreite.

12. Verfahren nach Anspruch 1,
wobei der Schritt des Bereitstellens des besagten Satzes von jeweiligen Datenübertragungsverbindungen (d1, ..., d6) das Ermitteln der besagten jeweiligen kürzester Pfadmaße (L_i) für die besagten Datenübertragungsverbindungen (d1, ..., d6) umfasst.

## Revendications

1. Procédé d'attribution de bande passante dans un réseau optique, **caractérisé par** les étapes suivantes,
- fournier une grille de bande passante contenant des premières voies de bande passante d'une bande passante inférieure et des voies de bande passante supérieure d'une bande passante supérieure, qui est le double de la bande passante inférieure, dans lequel une desdites voies de bande passante supérieure représente la même bande passante sur ladite grille de bande passante que deux desdites voies de bande passante inférieure,
- fournier un ensemble de demandes de connexions de transmission de données respectives (d1, ..., d6) avec des débits de données respectifs et des mesures de parcours respectives les plus courtes (L_1),
- fournir pour lesdites connexions de transmission de données respectives (d1, .... d6) des distances plus courtes respectives (Reach1), sur lesquelles un signal de données peut être transmis de manière transparente au débit de données respectif dans ladite bande passante inférieure, et des distances plus longues respectives (Reach2), sur lesquelles un signal de données peut être transmis de manière transparente au débit de données respectif dans ladite bande passante supérieure,
- attribuer des voies de bande passante de ladite bande passante inférieure pour les connexions de transmission de données (d5) dont la mesure de parcours respective la plus courte est inférieure ou égale à leur distance plus courte respective (Reach1),
- attribuer des voies de bande passante de ladite bande passante inférieure ou supérieure pour lesdites autres connexions de transmission de données (d1, d4, d6), dont la mesure de parcours respective la plus courte est supérieure à leur distance plus courte respective (Reach1), en utilisant des premier et deuxième nombres respectifs de régénérations optique-électrique-optique nécessaires (N1_1, N2_i) pour transmettre des signaux de données aux débits de données respectifs par l'intermédiaire desdites autres connexions de transmission de données en utilisant ladite bande passante inférieure ou ladite bande passante supérieure respectivement.

2. Procédé selon la revendication 1,
dans lequel l'étape d'attribution de voies de bande passante de ladite bande passante inférieure ou supérieure pour lesdites autres connexions de transmission de données (d1, d4, d6) comprend les étapes suivantes
- déterminer une attribution nécessaire de voies de bande passante de ladite bande passante supérieure pour lesdites autres connexions de transmission de données,
- si une attribution de voies de bande passante de ladite bande passante supérieure pour lesdites autres connexions de transmission de données n'est pas faisable, déterminer la liaison dudit réseau optique avec le plus grand nombre desdites autres connexions de transmission de données, pour lesquelles des voies de bande passante de ladite bande passante supérieure ne peuvent pas être attribuées,
- attribuer des voies de bande passante de ladite bande passante inférieure ou supérieure pour lesdites autres connexions de transmission de données (d1, d4, d6), sur ladite liaison, en utilisant lesdits premier et deuxième nombres respectifs de régénérations optique-électrique-optique nécessaires (N1_i, N2_i) pour transmettre des signaux de données aux débits de données respectifs par l'intermédiaire desdites autres connexions de transmission de données dans ladite bande passante inférieure ou ladite bande passante supérieure respectivement.

3. Procédé selon la revendication 1 ou 2,
dans lequel ladite étape d'attribution de voies de bande passante de ladite bande passante inférieure ou supérieure pour lesdites autres connexions de transmission de données (d1, d4, d6) comprend en outre l'étape suivante
- déterminer pour lesdites autres connexions de transmission de données lesdits premier et deuxième nombres respectifs de régénérations optique-électrique-optique nécessaires (N1_i, N2_i).

4. Procédé selon la revendication 3,
dans lequel l'étape d'attribution de voies de bande passante de ladite bande passante inférieure ou supérieure pour lesdites autres connexions de transmission de données (d1, d4, d6) sur ladite liaison comprend en outre les étapes suivantes
- attribuer des voies de bande passante de ladite bande passante inférieure pour un premier sous-ensemble desdites autres connexions de transmission de données (d1, d4, d6),
- attribuer des voies de bande passante de ladite bande passante supérieure pour un deuxième sous-ensemble desdites autres connexions de transmission de données (d1, d4, d6),
- dans lequel pour des connexions de transmission de données dudit premier sous-ensemble, des différences respectives (ΔN_i) entre lesdits premier et deuxième nombres respectifs de régénérations optique-électrique-optique nécessaires (N1_i, N2_i) sont inférieures à celles de connexions de transmission de données dudit deuxième sous-ensemble.

5. Procédé selon la revendication 3,
dans lequel ladite étape d'attribution de voies de bande passante de ladite bande passante inférieure ou supérieure pour lesdites autres connexions de transmission de données (d1, d4, d6) sur ladite liaison comprend en outre l'étape suivante
- attribuer des voies de bande passante de ladite bande passante inférieure pour celle desdites autres connexions de transmission de données (d1, d4, d6), pour lesquelles les différences respectives (ΔN_i) entre lesdits premier et deuxième nombres nécessaires respectifs de régénérations optique-électrique-optique nécessaires (N1_i, N2_i) sont les plus faibles.

6. Procédé selon la revendication 5,
comprenant en outre les étapes suivantes
- déterminer une attribution nécessaire de voie de bande passante de ladite bande passante supérieure pour le reste desdites autres connexions de transmission de données (d4) sur ladite liaison,
- si une attribution de voies de bande passante de ladite bande passante supérieure pour le reste desdites autres connexions de transmission de données (d4) sur ladite liaison est faisable, attribuer des voies de bande passante de ladite bande passante supérieure pour le reste desdites autres connexions de transmission de données (d4) sur ladite liaison.

7. Procédé selon la revendication 6,
- si une attribution de voies de bande passante de ladite bande passante supérieure pour le reste desdites autres connexions de transmission de données (d4) sur ladite liaison n'est pas faisable, revenir à ladite étape de détermination de cette liaison dudit réseau optique avec le plus grand nombre desdites autres connexions de transmission de données, pour lesquelles des voies de bande passante de ladite bande passante supérieure ne peuvent pas être attribuées.

8. Procédé selon la revendication 3,
dans lequel lesdits premier et deuxième nombres respectifs de régénérations optique-électrique-optique nécessaires (N1_i, N2_1) sont déterminés pour lesdites autres connexions de transmission de données en utilisant
- lesdits débits de données respectifs,
- lesdites mesures de parcours les plus courtes,
- un procédé de modulation prédéfini, et
- un taux d'erreurs binaires maximum, qui ne sera pas dépassé à une extrémité de réception de la connexion de transmission de données respective.

9. Procédé selon la revendication 1,
dans lequel une transmission transparente est une transmission dans laquelle un signal optique n'est pas régénéré au moyen d'une conversion optique-électrique-optique.

10. Procédé selon la revendication 1,
dans lequel une attribution de voies de bande passante est effectuée en utilisant des messages du protocole de réservation de ressources (RSVP).

11. Procédé selon la revendication 1,
comprenant l'étape suivante
- attribuer des voies de bande passante de ladite bande passante inférieure ou supérieure pour lesdites autres connexions de transmission de données (d1, d4, d6), dont la mesure de parcours respective la plus courte est supérieure à leur distance plus courte respective (Reach1), et inférieure ou égale à leur distance plus longue respective (Reach2), en utilisant des premier et deuxième nombres respectifs de régénérations optique-électrique-optique nécessaires (N1_i, N2_i) pour transmettre des signaux de données aux débits de données respectifs par l'intermédiaire desdites autres connexions de transmission de données dans ladite bande passante inférieure et ladite bande passante supérieure respectivement.

12. Procédé selon la revendication 1,
dans lequel l'étape de fourniture dudit ensemble de demandes de connexions de transmission de données respectives (d1, ..., d6) comprend la détermination desdites mesures de parcours respectives les plus courtes (L_i) pour lesdites connexions de transmission de données (d1, ..., d6).
